(19) Europäisches Patentamt
European Patent Office
Office européen des brevets

(11) **EP 3 308 194 B1**

(12) **FASCICULE DE BREVET EUROPEEN**

(45) Date de publication et mention
de la délivrance du brevet:
**17.11.2021 Bulletin 2021/46**

(21) Numéro de dépôt: **16722824.6**

(22) Date de dépôt: **02.05.2016**

(51) Int Cl.:
***G01S 13/06*** *(2006.01)*    ***G07C 9/00*** *(2020.01)*

(86) Numéro de dépôt international:
**PCT/EP2016/059782**

(87) Numéro de publication internationale:
**WO 2016/174267 (03.11.2016 Gazette 2016/44)**

(54) **DISPOSITIF ET PROCÉDÉ DE DÉTERMINATION DE PRÉSENCE D'UN IDENTIFIANT, ET PROGRAMME D'ORDINATEUR ASSOCIÉ**

VORRICHTUNG UND VERFAHREN ZUR BESTIMMUNG DES VORHANDENSEINS EINES IDENTIFIKATORS UND ZUGEHÖRIGES COMPUTERPROGRAMM

DEVICE AND METHOD FOR DETERMINING THE PRESENCE OF AN IDENTIFIER, AND ASSOCIATED COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**18.04.2018 Bulletin 2018/16**

(73) Titulaire: **Valeo Comfort and Driving Assistance
94046 Créteil Cedex (FR)**

(72) Inventeur: **LECONTE, Eric
94046 Créteil Cedex (FR)**

(74) Mandataire: **Delplanque, Arnaud
Valeo Comfort and Driving Assistance
6 rue Daniel Costantini
94000 Créteil (FR)**

(56) Documents cités:
**DE-A1- 10 341 286     US-A1- 2013 143 594
US-B1- 7 176 783       US-B1- 8 027 761**

**Description**

DOMAINE TECHNIQUE AUQUEL SE RAPPORTE L'INVENTION

La présente invention concerne la détection d'un identifiant dans une zone associée à un véhicule.

Elle concerne plus particulièrement un dispositif et un procédé de détermination de présence d'un identifiant, ainsi qu'un programme d'ordinateur associé.

L'invention s'applique particulièrement avantageusement dans le cas où la zone dans laquelle on souhaite détecter l'identifiant est rectangulaire.

ARRIÈRE-PLAN TECHNOLOGIQUE

Il a déjà été proposé de localiser un identifiant associé à un véhicule, par exemple dans le cadre des systèmes dits PEPS (pour *"Passive Entry Passive Start"*).

On évalue par exemple pour ce faire les distances respectives entre l'identifiant et une pluralité de balises, typiquement sur la base de temps de vol respectifs d'ondes radio utilisées dans des liaisons sans fil établies entre l'identifiant et ces balises.

Le document US 2013/143 594 propose dans ce cadre d'utiliser des techniques de trilatération pour obtenir la position de l'identifiant, puis d'en déduire la zone dans laquelle cet identifiant est situé.

Comme l'indique ce document, ces techniques nécessitent toutefois l'utilisation de trois balises ; elles impliquent en outre des calculs complexes pour déterminer des coordonnées (représentant la position de l'identifiant) à partir des distances mesurées par les trois balises.

OBJET DE L'INVENTION

Dans ce contexte, la présente invention propose un dispositif de détermination de présence d'un identifiant dans une zone rectangulaire associée à un véhicule et équipée de deux balises, le dispositif de détermination comprenant un module d'analyse conçu pour évaluer, au moyen de chacune des deux balises, la distance séparant l'identifiant et la balise concernée, pour calculer, en fonction des deux distances évaluées, une distance entre l'identifiant et une droite passant par les deux balises, et pour conclure à l'absence de l'identifiant dans la zone rectangulaire si la distance entre l'identifiant et la droite est supérieure à un seuil prédéterminé.

Un tel dispositif permet, avec seulement deux balises et des calculs limités, d'exclure très rapidement la présence de l'identifiant dans un grand nombre de cas. On remarque qu'en pratique, on peut déterminer si la distance entre l'identifiant et la droite est supérieure à un seuil déterminé en comparant la valeur représentative de cette distance (ici son carré) à une valeur mémorisée dans une mémoire du dispositif (ici le carré du seuil).

Le module d'analyse est conçu en outre pour comparer, si la distance entre l'identifiant et la droite est inférieure au seuil prédéterminé, une valeur angulaire prédéterminée et un angle formé entre ladite droite et une droite passant par l'identifiant et une des deux balises, ainsi qu'éventuellement une autre valeur angulaire prédéterminée et ledit angle.

Comme expliqué dans la description qui suit, on peut alors aboutir rapidement à la conclusion que l'identifiant est présent dans la zone rectangulaire au moyen de seulement deux comparaisons additionnelles.

On peut prévoir par exemple que le module d'analyse soit conçu pour calculer une valeur de cosinus dudit angle en fonction des deux distances évaluées, pour calculer la valeur représentative de la distance entre l'identifiant et la droite en fonction de ladite valeur de cosinus et pour comparer la valeur angulaire prédéterminée et ledit angle par comparaison de ladite valeur de cosinus et d'une donnée mémorisée.

La valeur de cosinus, facilement calculable à partir des deux distances évaluées, est ainsi utilisée à de nombreuses reprises, ce qui allège encore le processus.

Le module d'analyse peut également être conçu pour déterminer la distance entre une balise et la projection de l'identifiant sur la droite passant par les deux balises, ce qui permet de conclure à la présence ou à l'absence de l'identifiant dans la zone rectangulaire dans les quelques cas d'indécision.

Lorsque le dispositif comprend un processeur et une mémoire, le module d'analyse est par exemple réalisé notamment au moyen d'instructions exécutables par le processeur et adaptées à mettre en œuvre les fonctionnalités du module d'analyse lorsque ces instructions sont exécutées par le processeur.

L'invention propose également un procédé de détermination de présence d'un identifiant dans une zone rectangulaire associée à un véhicule et équipée de deux balises, comprenant les étapes suivantes (réalisées par exemple par un dispositif électronique tel qu'une unité électronique de commande du véhicule, comprenant éventuellement un processeur) :

- évaluer, au moyen de chacune des deux balises, la distance séparant l'identifiant et la balise concernée,
- calculer, en fonction des deux distances évaluées, une valeur représentative d'une distance entre l'identifiant et une droite passant par les deux balises,
- conclure à l'absence de l'identifiant dans la zone rectangulaire si la distance entre l'identifiant et la droite est supérieure à un seuil prédéterminé,
- si la distance entre l'identifiant et la droite est inférieure au seuil prédéterminé, une étape de comparaison visant à comparer une valeur angulaire prédéterminée et un angle formé entre ladite droite et une droite passant par l'identifiant et une des deux balises, et

- une étape de conclusion à la présence de l'identifiant dans la zone rectangulaire en fonction du résultat de l'étape de comparaison.

Comme déjà indiqué à propos du dispositif, une valeur de cosinus dudit angle peut être calculée en fonction des deux distances évaluées ; la valeur représentative de la distance entre l'identifiant et la droite peut alors être calculée en fonction de ladite valeur de cosinus et/ou l'étape de comparaison peut comprendre la comparaison de ladite valeur de cosinus et d'une donnée mémorisée.

En l'absence de conclusion de la présence de l'identifiant dans la zone rectangulaire par ladite comparaison, on peut prévoir :

- une étape de détermination de la distance entre une balise et la projection de l'identifiant sur la droite passant par les deux balises, et
- une étape de détermination de la présence de l'identifiant dans la zone rectangulaire par comparaison de cette dernière distance et d'un autre seuil prédéterminé.

La distance entre la balise et ladite projection peut être calculée en fonction de ladite valeur de cosinus.

Par ailleurs, la distance séparant l'identifiant et la balise concernée peut être évaluée en fonction du temps de vol d'une transmission radio (utilisant par exemple une modulation ultra large bande) entre l'identifiant et la balise concernée.

L'invention propose enfin un programme d'ordinateur comprenant des instructions exécutables par un processeur et conçues pour mettre en œuvre un procédé tel que proposé ci-dessus lorsque ces instructions sont exécutées par le processeur.

DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement un véhicule équipé d'un système de détermination de présence d'un identifiant dans un habitacle ;
- la figure 2 présente les étapes principales d'un procédé de détermination de présence de l'identifiant dans l'habitacle sur la base de distances préalablement évaluées entre deux balises et l'identifiant ;
- la figure 3 représente un premier exemple de situation de l'identifiant dans le véhicule ;
- la figure 4 représente un second exemple de situation de l'identifiant dans le véhicule ; et
- la figure 5 représente un troisième exemple de situation de l'identifiant dans le véhicule.

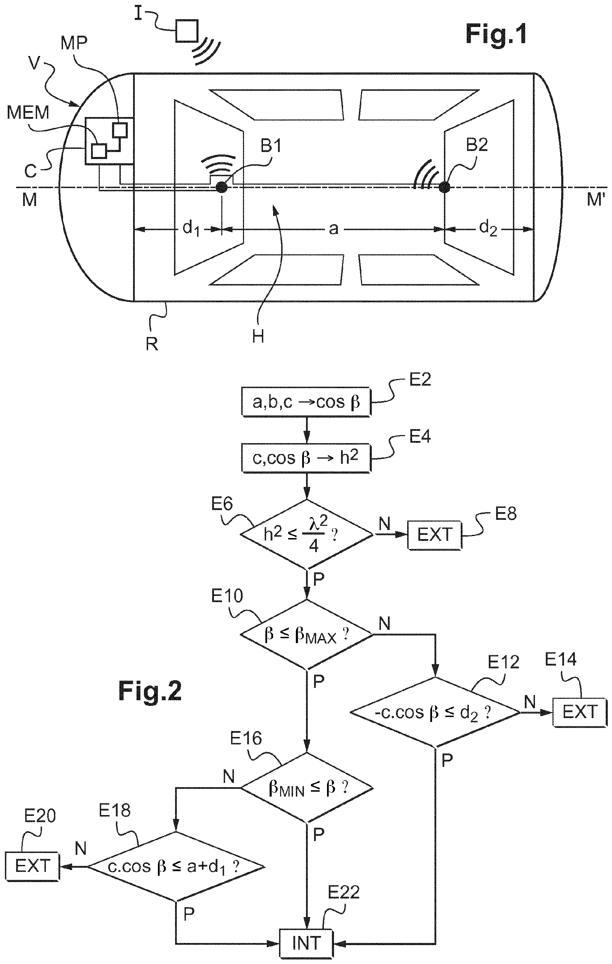

La figure 1 représente schématiquement un véhicule V équipé d'un système de détermination de présence d'un identifiant I dans une zone rectangulaire R, correspondant ici à un habitacle H, conforme à l'invention.

Ce système comprend une première balise B1 et une seconde balise B2 disposées dans l'habitacle H du véhicule V.

Pour déterminer la présence de l'identifiant I dans l'habitacle H comme expliqué ci-après, l'habitacle H est modélisé sous forme d'une zone rectangulaire R dont la surface correspond globalement à la surface de l'habitacle H en projection dans un plan horizontal contenant les deux balises B1, B2.

En variante, la zone rectangulaire R pourrait correspondre à une autre zone rectangulaire associée au véhicule V, par exemple une zone rectangulaire R couvrant l'habitacle H et des régions externes au véhicule V mais situées à proximité du véhicule V.

La première balise B1 et la seconde balise B2 sont ici placées sur la médiatrice MM' des petits côtés de la zone rectangulaire R modélisant ici l'habitacle H et séparées l'une de l'autre d'une distance a.

Comme visible en figure 1, on note $\lambda$ la largeur de la zone rectangulaire R, d1 la distance entre le première balise B1 et le petit côté de la zone rectangulaire R le plus proche de cette première balise B1, et d2 la distance entre la seconde balise B2 et le petit côté de la zone rectangulaire R le plus proche de cette seconde balise B2. (La longueur de la zone rectangulaire R est donc égale à $d_1+a+d_2$.)

Le système de détermination de présence comprend également une unité électronique de commande C reliée à chacune des balises B1, B2 par une liaison filaire (ou en variante, par une liaison sans fil).

Cette unité électronique de commande C comprend par exemple un processeur MP (ici un microprocesseur) et une mémoire MEM, par exemple une mémoire non-volatile (éventuellement réinscriptible).

La mémoire MEM mémorise notamment des instructions de programme d'ordinateur conçues, lorsqu'elles sont exécutées par le microprocesseur MP, pour mettre en œuvre tout ou partie du procédé décrit plus bas en référence à la figure 2.

En variante, l'unité électronique de commande C pourrait être réalisée sous forme d'un circuit intégré à application spécifique (ou ASIC pour *"Application Specific Integrated Circuit"*).

La mémoire MEM mémorise également des données utilisées dans le cadre de la mise en œuvre des procédés décrits ci-dessous, en particulier des données représentant des caractéristiques dimensionnelles de l'environnement considéré, par exemple la largeur $\lambda$ de la zone rectangulaire R (ou de manière équivalente le quart de son carré, soit $\lambda^2/4$, utilisé pour comparaison comme expliqué plus bas), la distance a entre la première balise B1 et la seconde balise B2, les distances $d_1$, $d_2$ définies ci-dessus entre une balise B1, B2 et le petit côté de la zone rectangulaire R le plus proche et la distance a séparant les balises B1, B2.

Dans l'exemple décrit ici, l'unité électronique de commande C est distincte de chacune des deux balises B1, B2. Chaque balise B1, B2 peut comprendre une antenne et une électronique de communication associée ; selon une autre possibilité, au moins une balise B1, B2 pourrait ne comprendre qu'une antenne, l'électronique de communication associée étant déportée, par exemple au niveau de l'unité électronique de comande C. En variante, l'unité électronique de commande C pourrait être associée (voire mettre en œuvre) une des deux balises B1, B2.

L'identifiant I est par exemple un transpondeur conçu pour établir une communication sans fil avec chacune des balises B1, B2 et éventuellement échanger des données (par exemple des données d'authentification) via la communication sans fil établie avec la balise concernée B1, B2 et/ou, via la balise concernée B1, B2, avec l'unité électronique de commande C.

La communication sans fil établie entre chaque balise B1, B2 et l'identifiant I est ici une liaison radio, utilisant par exemple une modulation ultra large bande (ou UWB pour *"Ultra Wide Band"*). L'identifiant I et chaque balise B1, B2 peuvent ainsi échanger des données à travers cette liaison radio et/ou déterminer le temps de vol de la transmission (en particulier grâce à la courte durée des impulsions utilisées dans la transmission de type UWB).

Chaque balise B1, B2 est conçue pour évaluer, sur la base du temps de vol de la transmission (ici par ondes radio) entre la balise concernée B1, B2 et l'identifiant I, la distance séparant la balise concernée B1 et l'identifiant I. Ainsi, la première balise B1 peut évaluer la distance b séparant la première balise B1 et l'identifiant I ; de même, la seconde balise B2 peut évaluer la distance c séparant la seconde balise B2 et l'identifiant I.

Les distances évaluées b, c peuvent alors être transmises à l'unité électronique de commande C pour traitement comme décrit ci-après.

En variante, pour au moins une balise B1, B2, on pourrait prévoir que la balise concernée B1, B2 transmette à l'unité électronique de commande C une information descriptive du temps de vol entre la balise concernée B1, B2 et l'identifiant I, et que l'unité électronique de commande C détermine la distance b, c entre la balise concernée B1, B2 et l'identifiant I sur la base de l'information transmise.

Dans les deux cas, l'unité électronique de commande C peut alors mettre en œuvre le procédé décrit ci-dessous en référence à la figure 2, auquel cas le processeur MP forme un module d'analyse apte à déterminer si l'identifiant I est situé dans la zone rectangulaire R (qui correspond ici à l'habitacle H du véhicule V).

Le système de détermination de présence de l'identifiant I dans l'habitacle H peut ainsi être utilisé notamment pour vérifier la présence de l'identifiant I avant démarrage du moteur du véhicule, ou en variante pour commander le verrouillage automatique des portes du véhicule V lorsque l'identifiant I est déterminé comme absent dans l'habitacle, ou, dans la variante envisagée plus haut, comment n'étant pas à une certaine proximité de celui-ci, par exemple dans un système de type PEPS (pour *"Passive Entry Passive Start"*).

Un tel verrouillage est par exemple commandé par l'unité de commande C lorsqu'elle détermine que l'identifiant I n'est pas présent dans la zone rectangulaire R grâce au procédé décrit ci-dessous.

La figure 2 présente les étapes principales d'un procédé de détermination de présence de l'identifiant I dans la zone rectangulaire R sur la base des distances b, c évaluées comme indiqué ci-dessus entre les balises B1, B2 et l'identifiant I.

Ce procédé débute à l'étape E2 à laquelle l'unité électronique de commande C (ici précisément le processeur MP) calcule le cosinus de l'angle β formé entre le segment [B2B1] et le segment [B2I] (soit

$$\beta = \widehat{B1B2I}$$

) en fonction des distances b, c évaluées ci-dessus (et de la distance a entre les deux balises B1, B2 mémorisée dans la mémoire MEM) :

$$\cos \beta = (a^2 + c^2 - b^2)/(2ac) \ .$$

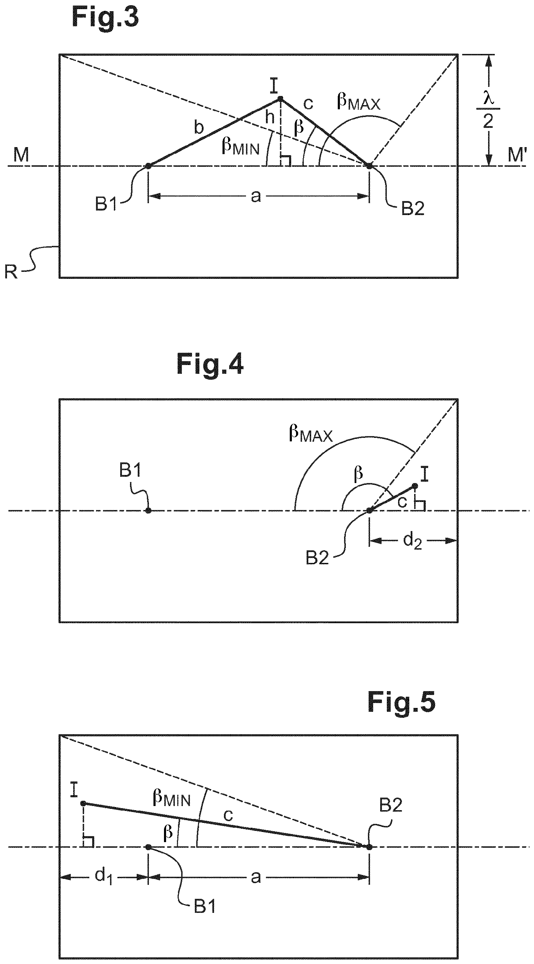

On pourra se référer aux figures 3 à 5 qui donnent respectivement trois exemples de situation possible de l'identifiant I au sein de l'habitacle H et montrent notamment l'angle β dans la situation concernée.

On remarque que l'angle β est un angle non orienté compris entre 0° et 180° (soit entre 0 et π rad).

Le procédé se poursuit à l'étape E4 à laquelle l'unité électronique de commande C (ici précisément le processeur MP) calcule la distance h entre l'identifiant I et la droite MM' passant par les deux balises B1, B2, ici précisément le carré de cette distance en fonction de la distance (évaluée) c entre la seconde balise B2 et l'identifiant I, et du cosinus de l'angle β calculé à l'étape E2 :

$$h^2 = c^2 . \sin^2 \beta = c^2 . (1 - \cos^2 \beta) \ .$$

L'unité électronique de commande C (ici précisément le processeur MP) détermine alors à l'étape E6 si la distance h calculée à l'étape E4 est inférieure à la moitié de la largeur de la zone rectangulaire R, c'est-à-dire si h ≤ λ/2. On compare ici en pratique les carrés de ces valeurs : on détermine si h² ≤ λ²/4.

Dans la négative (flèche N en figure 2), cela signifie que l'identifiant I est à l'extérieur d'une bande de largeur λ et centrée sur la droite MM'. L'identifiant I est alors nécessairement à l'extérieur de la zone rectangulaire R et le procédé de la figure 2 se termine alors par la conclusion que l'identifiant I est à l'extérieur de la zone d'intérêt, ici l'habitacle H (étape E8).

En cas de détermination positive à l'étape E6 (flèche P en figure 2), l'identifiant I est à l'intérieur d'une bande de largeur λ et centrée sur la droite MM' (comme d'ailleurs dans les trois situations représentées respectivement sur les figures 3 à 5) et on procède alors comme suit.

L'unité électronique de commande C (précisément le microprocesseur MP) détermine à l'étape E10 si l'angle β mentionné ci-dessus est inférieur à un premier angle prédéterminé $\beta_{MAX}$. Comme bien visible en figure 3, le premier angle prédéterminé $\beta_{MAX}$ est l'angle formé entre le segment [B2B1] et le segment reliant la seconde balise B2 et l'un (quelconque) des deux sommets de la zone rectangulaire R les plus proches de la seconde balise B2.

En pratique, cette comparaison peut se faire en comparant le cosinus de l'angle β déterminé à l'étape E2 au cosinus de l'angle $\beta_{MAX}$, la valeur cos $\beta_{MAX}$ étant mémorisé par exemple dans la mémoire MEM. Précisément, la détermination précitée de l'étape E10 revient à déterminer si cos $\beta \geq$ cos $\beta_{MAX}$ (les deux cosinus cos β, cos $\beta_{MAX}$ étant ordonnés à l'inverse des deux angles β, $\beta_{MAX}$ du fait que la fonction cosinus est décroissante entre 0° et 180°).

Si le résultat de la détermination de l'étape E10 est positif (flèche P en figure 2), c'est-à-dire si l'on a $\beta \leq \beta_{MAX}$ (ou en pratique cos $\beta \geq$ cos $\beta_{MAX}$), le procédé se poursuit à l'étape E16 décrite plus bas.

Si le résultat de la détermination de l'étape E10 est négatif (flèche N en figure 2), c'est-à-dire si l'on a $\beta \geq \beta_{MAX}$ (ou en pratique cos $\beta \leq$ cos $\beta_{MAX}$), ceci signifie que l'on se trouve dans une situation du type de celle visible en figure 4 et le procédé se poursuit alors à l'étape E12 décrite à présent.

L'unité électronique de commande C (précisément le microprocesseur MP) détermine à l'étape E12 la distance entre la seconde balise B2 et la projection de la position de l'identifiant I sur la droite MM' (cette distance valant -c. cos β, cos β étant négatif dans un tel cas, comme visible en figure 4) et compare cette distance à la distance $d_2$ (mémorisée comme déjà indiqué dans la mémoire MEM et correspondant à la distance entre la seconde balise B2 et le petit côté de la zone rectangulaire R le plus proche de cette seconde balise B2).

L'étape E12 consiste ainsi à vérifier si : -c.cos $\beta \leq d_2$ .

Dans la négative (flèche N en figure 2), cela signifie que l'identifiant I est à l'extérieur de la zone rectangulaire R et le procédé de la figure 2 se termine alors par la conclusion que l'identifiant I est à l'extérieur de la zone d'intérêt, ici l'habitacle H (étape E14).

Dans l'affirmative (flèche P en figure 2), cela signifie que l'identifiant I est à l'intérieur de la zone rectangulaire R, comme représenté en figure 4, et le procédé de la figure 2 se termine alors par la conclusion que l'identifiant I est à l'intérieur de la zone d'intérêt, ici l'habitacle H (étape E22).

On décrit à présent l'étape E16 à laquelle le procédé aboutit comme expliqué ci-dessus lorsqu'il est déterminé à l'étape E10 que : $\beta \leq \beta_{MAX}$.

L'unité électronique de commande C (précisément le microprocesseur MP) détermine à l'étape E16 si l'angle β mentionné ci-dessus est supérieur à un second angle prédéterminé $\beta_{MIN}$. Comme bien visible en figure 3, le second angle prédéterminé $\beta_{MIN}$ est l'angle formé entre le segment [B2B1] et le segment reliant la seconde balise B2 et l'un (quelconque) des deux sommets de la zone rectangulaire R les plus éloignés de la seconde balise B2.

En pratique, cette comparaison peut se faire en comparant le cosinus de l'angle β déterminé à l'étape E2 au cosinus de l'angle $\beta_{MIN}$, la valeur cos $\beta_{MIN}$ étant mémorisé par exemple dans la mémoire MEM. Précisément, la détermination précitée de l'étape E16 revient à déterminer si cos $\beta \leq$ cos $\beta_{MIN}$ (les deux cosinus cos β, cos $\beta_{MIN}$ étant ordonnés à l'inverse des deux angles β, $\beta_{MIN}$ du fait que la fonction cosinus est décroissante entre 0° et 180°).

Si le résultat de la détermination de l'étape E16 est positif (flèche P en figure 2), c'est-à-dire si l'on a $\beta_{MIN} \leq \beta$ (ou en pratique cos $\beta \leq$ cos $\beta_{MIN}$), on se situe dans le cas de la figure 3 où l'angle β est compris entre le second angle prédéterminé $\beta_{MIN}$ et le premier angle prédéterminé $\beta_{MAX}$ et on peut en déduire à l'étape E22 que l'identifiant I est dans la zone rectangulaire R (puisqu'il a été déterminé suite à l'étape E6 que l'identifiant I est dans la bande de largeur λ/2 centrée sur la droite MM').

Si le résultat de la détermination de l'étape E16 est négatif (flèche N en figure 2), c'est-à-dire si l'on a $\beta \leq \beta_{MIN}$ (ou en pratique cos $\beta \geq$ cos $\beta_{MIN}$), ceci signifie que l'on se trouve dans une situation du type de celle visible en figure 5 et le procédé se poursuit alors à l'étape E18 décrite à présent.

L'unité électronique de commande C (précisément le microprocesseur MP) détermine à l'étape E18 la distance entre la seconde balise B2 et la projection de la position de l'identifiant I sur la droite MM' (cette distance valant c. cos β) et compare cette distance à la distance $a+d_1$ (correspondant à la distance entre la seconde balise B2 et le petit côté de la zone rectangulaire R le plus éloigné de cette seconde balise B2, les distances a et $d_1$ étant mémorisées comme déjà indiqué dans la mémoire MEM).

L'étape E12 consiste ainsi à vérifier si : c.cos $\beta \leq a+d_1$ .

Dans la négative (flèche N en figure 2), cela signifie que l'identifiant I est à l'extérieur de la zone rectangulaire R et le procédé de la figure 2 se termine alors par la conclusion que l'identifiant I est à l'extérieur de la zone d'intérêt, ici l'habitacle H (étape E20).

Dans l'affirmative (flèche P en figure 2), cela signifie que l'identifiant I est à l'intérieur de la zone rectangulaire R, comme représenté en figure 5, et le procédé de la figure 2 se termine alors par la conclusion que l'identifiant I est à l'intérieur de la zone d'intérêt, ici l'habitacle H (étape E22).

Le procédé qui vient d'être décrit permet de déterminer la présence de l'identifiant I dans la zone rectangulaire R avec un nombre très limité de calculs et donc de manière très rapide. On remarque que ces calculs ne sont d'ailleurs que des additions, des soustractions, des multiplications et des divisions.

Dans la plupart des cas (situation de la figure 3), on aboutit à une conclusion sur la simple base des légers calculs des étapes E2 et E4 et des comparaisons des étapes E6, E10 et E16.

Dans certains cas (situations des figures 4 et 5), seuls un calcul et une comparaison additionnels (étape E12 ou E18) sont nécessaires pour conclure.

### Revendications

1. Dispositif de détermination de présence d'un identifiant (I) dans une zone rectangulaire (R) associée à un véhicule (V) et équipée de deux balises (B1, B2), le dispositif de détermination étant adapté pour coopérer avec lesdites deux balises et comprenant un module d'analyse conçu pour :

   - évaluer, au moyen de chacune des deux balises (B1, B2), la distance (b ; c) séparant l'identifiant (I) et la balise concernée (B1 ; B2), pour
   - calculer, en fonction des deux distances évaluées (b, c), une valeur ($h^2$) représentative d'une distance (h) entre l'identifiant (I) et une droite (MM') passant par les deux balises (B1, B2),
   - conclure à l'absence de l'identifiant (I) dans la zone rectangulaire (R) si la distance (h) entre l'identifiant (I) et la droite (MM') est supérieure à un seuil prédéterminé,
   - si la distance (h) entre l'identifiant (I) et la droite (MM') est inférieure à un seuil prédéterminé, comparer une valeur angulaire prédéterminée ($\beta_{MIN}$ ; $\beta_{MAX}$) et un angle ($\beta$) formé entre ladite droite (MM') et une droite passant par l'identifiant (I) et une des deux balises (B2), et conclure à la présence de l'identifiant (I) dans la zone rectangulaire (R) en fonction du résultat de ladite comparaison.

2. Dispositif de détermination selon la revendication 1, dans lequel le module d'analyse est conçu pour :

   - calculer une valeur de cosinus (cos $\beta$) dudit angle ($\beta$) en fonction des deux distances évaluées (b, c) ;
   - calculer la valeur représentative ($h^2$) de la distance (h) entre l'identifiant (I) et la droite (MM') en fonction de ladite valeur de cosinus (cos $\beta$) ;
   - comparer la valeur angulaire prédéterminée

($\beta_{MIN}$ ; $\beta_{MAX}$) et ledit angle ($\beta$) par comparaison de ladite valeur de cosinus (cos $\beta$) et d'une donnée mémorisée.

3. Dispositif de détermination selon l'une des revendications 1 à 2, dans lequel le module d'analyse est conçu pour déterminer la distance entre une balise (B2) et la projection de l'identifiant (I) sur la droite (MM') passant par les deux balises (B1, B2).

4. Procédé de détermination de présence d'un identifiant (I) dans une zone rectangulaire (R) associée à un véhicule (V) et équipée de deux balises (B1, B2), comprenant les étapes suivantes :

   - évaluer, au moyen de chacune des deux balises (B1, B2), la distance (b ; c) séparant l'identifiant (I) et la balise concernée (B1 ; B2),
   - calculer (E2, E4), en fonction des deux distances évaluées (b, c), une valeur ($h^2$) représentative d'une distance (h) entre l'identifiant (I) et une droite (MM') passant par les deux balises (B1, B2),
   - conclure (E6, E8) à l'absence de l'identifiant (I) dans la zone rectangulaire (R) si la distance (h) entre l'identifiant (I) et la droite (MM') est supérieure à un seuil prédéterminé,
   - si la distance (h) entre l'identifiant (I) et la droite (MM') est inférieure au seuil prédéterminé, une étape de comparaison (E10 ; E16) visant à comparer une valeur angulaire prédéterminée ($\beta_{MIN}$ ; $\beta_{MAX}$) et un angle ($\beta$) formé entre ladite droite (MM') et une droite passant par l'identifiant (I) et une des deux balises (B2), et
   - une étape de conclusion (E22) à la présence de l'identifiant (I) dans la zone rectangulaire (R) en fonction du résultat de l'étape de comparaison.

5. Procédé de détermination selon la revendication 4, dans lequel une valeur de cosinus (cos $\beta$) dudit angle ($\beta$) est calculée (E2) en fonction des deux distances évaluées (b, c), dans lequel la valeur représentative ($h^2$) de la distance (h) entre l'identifiant (I) et la droite (MM') est calculée (E4) en fonction de ladite valeur de cosinus (cos $\beta$) et dans lequel l'étape de comparaison (E10; E16) comprend la comparaison de ladite valeur de cosinus (cos $\beta$) et d'une donnée mémorisée.

6. Procédé de détermination selon la revendication 4 ou 5, comprenant, en l'absence de conclusion de la présence de l'identifiant (I) dans la zone rectangulaire (R) par ladite comparaison (E10 ; E16) :

   - une étape de détermination de la distance entre une balise (B2) et la projection de l'identifiant (I) sur la droite (MM') passant par les deux balises (B1, B2), et

- une étape de détermination de la présence de l'identifiant (I) dans la zone rectangulaire (R) par comparaison (E12 ; E18) de cette dernière distance et d'un autre seuil prédéterminé ($d_2$).

**7.** Procédé de détermination selon la revendication 6 prise dans la dépendance de la revendication 5, dans lequel la distance entre la balise (B2) et ladite projection est calculée en fonction de ladite valeur de cosinus (cos $\beta$).

**8.** Procédé de détermination selon l'une des revendications 4 à 7, dans lequel la distance séparant l'identifiant (I) et la balise concernée (B1, B2) est évaluée en fonction du temps de vol d'une transmission radio entre l'identifiant (I) et la balise concernée (B1, B2).

**9.** Procédé de détermination selon la revendication 8, dans lequel la transmission radio utilise une modulation ultra large bande.

**10.** Programme d'ordinateur comprenant des instructions exécutables par un processeur, qui conduisent le dispositif selon la revendication 1 à mettre en œuvre un procédé selon l'une des revendications 4 à 9 lorsque ces instructions sont exécutées par le processeur.

**Patentansprüche**

**1.** Vorrichtung zur Bestimmung des Vorhandenseins einer Kennung (I) in einer rechteckigen Zone (R), die einem Fahrzeug (V) zugeordnet und mit zwei Peilsendern (B1, B2) ausgestattet ist, wobei die Bestimmungsvorrichtung geeignet ist, mit den zwei Peilsendern zusammenzuwirken, und ein Analysemodul enthält, das konzipiert ist:

- mittels jedes der zwei Peilsender (B1, B2) den Abstand (b; c) zu ermitteln, der die Kennung (I) und den betreffenden Peilsender (B1; B2) trennt, um
- abhängig von den zwei ermittelten Abständen (b, c) einen Wert ($h^2$) zu berechnen, der für einen Abstand (h) zwischen der Kennung (I) und einer durch die zwei Peilsender (B1, B2) verlaufenden Geraden (MM') repräsentativ ist,
- auf die Abwesenheit der Kennung (I) in der rechteckigen Zone (R) zu schließen, wenn der Abstand (h) zwischen der Kennung (I) und der Geraden (MM') größer als eine vorbestimmte Schwelle ist,
- wenn der Abstand (h) zwischen der Kennung (I) und der Geraden (MM') geringer als eine vorbestimmte Schwelle ist, einen vorbestimmten Winkelwert ($\beta_{MIN}$; $\beta_{MAX}$) und einen zwischen der Geraden (MM') und einer durch die Kennung (I) und einen der zwei Peilsender (B2) verlaufenden Geraden gebildeten Winkel ($\beta$) zu vergleichen, und abhängig vom Ergebnis des Vergleichs auf das Vorhandensein der Kennung (I) in der rechteckigen Zone (R) zu schließen.

**2.** Bestimmungsvorrichtung nach Anspruch 1, wobei das Analysemodul konzipiert ist:

- einen Cosinuswert (cos $\beta$) des Winkels ($\beta$) abhängig von den zwei ermittelten Abständen (b, c) zu berechnen;
- den für den Abstand (h) zwischen der Kennung (I) und der Geraden (MM') repräsentativen Wert ($h^2$) abhängig vom Cosinuswert (cos $\beta$) zu berechnen;
- den vorbestimmten Winkelwert ($\beta_{MIN}$; $\beta_{MAX}$) und den Winkel ($\beta$) durch Vergleich des Cosinuswerts (cos $\beta$) und eines gespeicherten Datenwerts zu vergleichen.

**3.** Bestimmungsvorrichtung nach einem der Ansprüche 1 bis 2, wobei das Analysemodul konzipiert ist, den Abstand zwischen einem Peilsender (B2) und der Projektion der Kennung (I) auf die durch die zwei Peilsender (B1, B2) verlaufende Gerade (MM') zu bestimmen.

**4.** Verfahren zur Bestimmung des Vorhandenseins einer Kennung (I) in einer rechteckigen Zone (R), die einem Fahrzeug (V) zugeordnet und mit zwei Peilsender (B1, B2) ausgestattet ist, das die folgenden Schritte enthält:

- Ermitteln, mittels jedes der zwei Peilsender (B1, B2), des die Kennung (I) und den betreffenden Peilsender (B1; B2) trennenden Abstands (b; c),
- Berechnen (E2, E4), abhängig von den zwei ermittelten Abständen (b, c), eines für einen Abstand (h) zwischen der Kennung (I) und einer durch die zwei Peilsender (B1, B2) verlaufenden Geraden (MM') repräsentativen Werts ($h^2$),
- Schließen (E6, E8) auf die Abwesenheit der Kennung (I) in der rechteckigen Zone (R), wenn der Abstand (h) zwischen der Kennung (I) und der Geraden (MM') größer ist als eine vorbestimmte Schwelle,
- wenn der Abstand (h) zwischen der Kennung (I) und der Geraden (MM') kleiner ist als die vorbestimmte Schwelle, einen Vergleichsschritt (E10; E16), der darauf abzielt, einen vorbestimmten Winkelwert ($\beta_{MIN}$; $\beta_{MAX}$) und einen zwischen der Geraden (MM') und einer durch die Kennung (I) und einen der zwei Peilsender (B2) verlaufenden Geraden gebildeten Winkel ($\beta$) zu vergleichen, und

- einen Schritt des Schließens (E22) auf das Vorhandensein der Kennung (I) in der rechteckigen Zone (R) abhängig vom Ergebnis des Vergleichsschritts.

5. Bestimmungsverfahren nach Anspruch 4, wobei ein Cosinuswert (cos β) des Winkels (β)abhängig von den zwei ermittelten Abständen (b, c) berechnet wird (E2), wobei der für den Abstand (h) zwischen der Kennung (I) und der Geraden (MM') repräsentative Wert ($h^2$) abhängig vom Cosinuswert (cos β) berechnet wird (E4), und wobei der Vergleichsschritt (E10; E16) den Vergleich des Cosinuswerts (cos β) und eines gespeicherten Datenwerts enthält.

6. Bestimmungsverfahren nach Anspruch 4 oder 5, das in Abwesenheit eines Schließens auf das Vorhandensein der Kennung (I) in der rechteckigen Zone (R) durch den Vergleich (E10; E16) enthält:

  - einen Schritt der Bestimmung des Abstands zwischen einem Peilsender (B2) und der Projektion der Kennung (I) auf die durch die zwei Peilsender (B1, B2) verlaufende Gerade (MM'), und
  - einen Schritt der Bestimmung des Vorhandenseins der Kennung (I) in der rechteckigen Zone (R) durch Vergleich (E12; E18) dieses letzten Abstands und einer anderen vorbestimmten Schwelle ($d_2$).

7. Bestimmungsverfahren nach Anspruch 6 abhängig von Anspruch 5, wobei der Abstand zwischen der Peilsender (B2) und der Projektion abhängig vom Cosinuswert (cos β) berechnet wird.

8. Bestimmungsverfahren nach einem der Ansprüche 4 bis 7, wobei der die Kennung (I) und den betreffenden Peilsender (B1, B2) trennende Abstand abhängig von der Laufzeit einer Funkübertragung zwischen der Kennung (I) und dem betreffenden Peilsender (B1, B2) ermittelt wird.

9. Bestimmungsverfahren nach Anspruch 8, wobei die Funkübertragung eine Ultrabreitbandmodulation verwendet.

10. Computerprogramm, das von einem Prozessor ausführbare Anweisungen enthält, die die Vorrichtung nach Anspruch 1 dazu bringen, ein Verfahren nach einem der Ansprüche 4 bis 9 durchzuführen, wenn diese Anweisungen vom Prozessor ausgeführt werden.

**Claims**

1. Device for determining the presence of an identifier (I) in a rectangular zone (R) associated with a vehicle (V) and equipped with two beacons (B1, B2), the determination device being adapted to cooperate with said two beacons and comprising an analysis module designed to:

  - assess, by means of each of the two beacons (B1, B2), the distance (b; c) separating the identifier (I) and the beacon concerned (B1; B2), in order to
  - calculate, as a function of the two assessed distances (b, c), a value ($h^2$) representative of a distance (h) between the identifier (I) and a straight line (MM') passing through the two beacons (B1, B2),
  - conclude on the absence of the identifier (I) in the rectangular zone (R) if the distance (h) between the identifier (I) and the straight line (MM') is greater than a predetermined threshold,
  - if the distance (h) between the identifier (I) and the straight line (MM') is less than a predetermined threshold, compare a predetermined angular value ($\beta_{MIN}$; $\beta_{MAX}$) and an angle (β) formed between said straight line (MM') and a straight line passing through the identifier (I) and one of the two beacons (B2), and conclude on the presence of the identifier (I) in the rectangular zone (R) as a function of the result of said comparison.

2. Determination device according to Claim 1, wherein the analysis module is designed to:

  - calculate a cosine value (cos β) of said angle (β) as a function of the two assessed distances (b, c);
  - calculate the representative value ($h^2$) of the distance (h) between the identifier (I) and the straight line (MM') as a function of said cosine value (cos β);
  - compare the predetermined angular value ($\beta_{MIN}$; $\beta_{MAX}$) and said angle (β) by comparison of said cosine value (cos β) and a stored datum.

3. Determination device according to one of Claims 1 and 2, wherein the analysis module is designed to determine the distance between a beacon (B2) and the projection of the identifier (I) on the straight line (MM') passing through the two beacons (B1, B2).

4. Method for determining the presence of an identifier (I) in a rectangular zone (R) associated with a vehicle (V) and equipped with two beacons (B1, B2), comprising the following steps:

  - assessing, by means of each of the two beacons (B1, B2), the distance (b; c) separating the identifier (I) and the beacon concerned (B1; B2),
  - calculating (E2, E4), as a function of the two assessed distances (b, c), a value ($h^2$) representative of a distance (h) between the identifier (I) and a straight line (MM') passing through the two beacons (B1, B2),
- concluding (E6, E8) on the absence of the identifier (I) in the rectangular zone (R) if the distance (h) between the identifier (I) and the straight line (MM') is greater than a predetermined threshold,
- if the distance (h) between the identifier (I) and the straight line (MM') is less than the predetermined threshold, a comparison step (E10; E16) aiming to compare a predetermined angular value ($\beta_{MIN}$; $\beta_{MAX}$) and an angle ($\beta$) formed between said straight line (MM') and a straight line passing through the identifier (I) and one of the two beacons (B2), and
- a step of concluding (E22) on the presence of the identifier (I) in the rectangular zone (R) as a function of the result of the comparison step.

5. Determination method according to Claim 4, wherein a cosine value (cos $\beta$) of said angle ($\beta$) is calculated (E2) as a function of the two assessed distances (b, c), wherein the representative value ($h^2$) of the distance (h) between the identifier (I) and the straight line (MM') is calculated (E4) as a function of said cosine value (cos $\beta$) and wherein the comparison step (E10; E16) comprises the comparison of said cosine value (cos $\beta$) and a stored datum.

6. Determination method according to Claim 4 or 5, comprising, in the absence of conclusion on the presence of the identifier (I) in the rectangular zone (R) by said comparison (E10; E16):

- a step of determination of the distance between a beacon (B2) and the projection of the identifier (I) on the straight line (MM') passing through the two beacons (B1, B2), and
- a step of determination of the presence of the identifier (I) in the rectangular zone (R) by comparison (E12; E18) of this last distance and another predetermined threshold ($d_2$).

7. Determination method according to Claim 6 taken as dependent on Claim 5, wherein the distance between the beacon (B2) and said projection is calculated as a function of said cosine value (cos $\beta$).

8. Determination method according to one of Claims 4 to 7, wherein the distance separating the identifier (I) and the beacon concerned (B1, B2) is assessed as a function of the time of flight of a radio transmission between the identifier (I) and the beacon concerned (B1, B2).

9. Determination method according to Claim 8, wherein the radio transmission uses an ultra-wideband modulation.

10. Computer program comprising instructions that can be executed by a processor, which cause the device according to Claim 1 to implement a method according to one of Claims 4 to 9 when these instructions are executed by the processor.

# Fig.1

V  
MP  
I  
MEM  
C  
M  
d₁  
B1  
a  
H  
R  
B2  
d₂  
M'

$$a,b,c \rightarrow \cos \beta \quad E2$$

$$c,\cos \beta \rightarrow h^2 \quad E4$$

E6 $\quad h^2 \leq \dfrac{\lambda^2}{4} ?$ $\quad$ N $\rightarrow$ EXT $\quad$ E8

P

E10 $\quad \beta \leq \beta_{MAX} ?$ $\quad$ N

P

# Fig.2

E12 $\quad -c.\cos \beta \leq d_2 ?$ $\quad$ N $\rightarrow$ EXT $\quad$ E14

P

E16 $\quad$ N $\quad \beta_{MIN} \leq \beta ?$

E20 EXT $\leftarrow$ N $\quad$ E18 $\quad c.\cos \beta \leq a+d_1 ?$

P

P $\quad$ E22

INT

# Fig.3

# Fig.4

# Fig.5

**EP 3 308 194 B1**

## RÉFÉRENCES CITÉES DANS LA DESCRIPTION

### Documents brevets cités dans la description

- US 2013143594 A